# EUROPÄISCHE PATENTANMELDUNG

(11) **EP 1 211 712 A2**
(43) Veröffentlichungstag der Anmeldung: **05.06.2002**
(21) Anmeldenummer: 01000679.9
(22) Anmeldetag: 29.11.2001
(51) Int. Cl.: H01J 31/20, H01J 29/34, H04N 9/24

(54) **Kathodenstrahlröhre mit Anordnung zur Elektronenstrahlkontrolle**

(30) Priorität: 30.11.2000 DE 10059771
(71) Anmelder: Philips Corporate Intellectual Property GmbH, 52064 Aachen (DE); Koninklijke Philips Electronics N.V., 5621 BA Eindhoven (NL)
(72) Erfinder: Bechtel, Helmut, 52064, Aachen (DE); Busselt, Wolfgang, 52064, Aachen (DE); Gläser, Harald, Aachen, 52064 (DE)
(74) Vertreter: Volmer, Georg, Dipl.-Ing.

(57) **Zusammenfassung**

Die Erfindung beschreibt eine Kathodenstrahlröhre, bei der die Position des Elektronenstrahls (7, 8, 9) dadurch bestimmt wird, dass Leiterbahnen (12, 13) zwischen den einzelnen Leuchtstoffstreifen der segmentierten Leuchtstoffschicht (11) angeordnet sind. Die Leiterbahnen (12,13) sind auf isolierenden Streifen (15) angeordnet, um Störungen bei der Positionsbestimmung des Elektronenstrahls (7,8,9) zu vermeiden.

## Beschreibung

Die Erfindung betrifft eine Kathodenstrahlröhre ausgestattet mit einem Farbbildschirm, einer Elektronenkanone zur Emission mindestens eines Elektronenstrahls und einer Ablenkungsvorrichtung, wobei der Farbbildschirm eine Frontplatte, eine segmentierte Leuchtstoffschicht, auf den Segmenten aufgebracht eine Aluminiumschicht, zwischen den Segmenten einen ersten Satz Leiterbahnen und einen zweiten Satz Leiterbahnen, sowie weiterhin ein Mittel zum Empfang von Signalen, die von den Leiterbahnen generiert werden, und ein Mittel zur Weitergabe von Korrektursignalen an die Ablenkvorrichtung aufweist.

Eine Farbkathodenstrahlröhre weist einen Farbbildschirm, einen Hals und einen den Farbbildschirm mit dem Hals verbindenden Konus und eine im Inneren des Halses vorgesehene Elektronenkanone zur Emission mindestens eines Elektronenstrahls auf. Am Hals befinden sich Ablenkspulen, die den Elektronenstrahl horizontal und vertikal ablenken, so dass ein Zeilenraster entsteht. In den meisten Fällen enthalten Farbkathodenstrahlröhren drei Elektronenkanonen für die drei Grundfarben Rot, Grün und Blau, welche von den Ablenkspulen als Ganzes abgelenkt werden. Der Farbbildschirm weist eine Leuchtstoffschicht auf, in der die rot-, grün- bzw. blau-emittierenden Leuchtstoffe entweder als senkrechte Streifentripel oder im Muster aus im Dreieck angeordneten Punktetripeln aufgebracht sind. Um sicherzustellen, dass jeder der drei Elektronenstrahlen nur die für ihn bestimmten Leuchtstoffe trifft, ist eine sogenannte Schattenmaske dicht vor dem Farbbildschirm angebracht. Jedem Leuchtstofftripel ist in der Schattenmaske genau eine Öffnung beispielsweise ein Schlitz oder ein Loch, zugeordnet, durch die gleichzeitig drei Elektronenstrahlbündel unter leicht verschiedenen Winkeln hindurchgehen.

Nachteilig bei einer solchen Schattenmaske ist, dass fast 80 % der Elektronen nicht durch die Schattenmaske gelangen, sondern auf die Schattenmaske treffen und dann abgeführt werden. Ein weiterer Nachteil einer Schattenmaske ist, dass während des Betriebs Mikrophony-Effekte auftreten können. Außerdem kann sich eine Schattenmaske beim Betrieb, durch die dadurch bedingte Erwärmung, verziehen und die Öffnungan der Schattenmaske sitzen nicht mehr an den richtigen Positionen

Aus der WO 00/38212 ist eine Kathodenstrahlröhre mit einer Anordnung zur Elektronenstrahlkontrolle bekannt, bei der die Position des Elektronenstrahls dadurch bestimmt wird, dass Leitelbahnen unter jedem Leuchtstoffstreifen angeordnet sind. Aus der gemessenen Stromdifferenz zwischen zwei benachbarten Leiterbahnen kann die Position des Elektronenstrahls bestimmt und gegebenenfalls eine Korrektur vorgenommen werden. Derartige Kathodenstrahlröhren werden auch als Indexröhren bezeichnet.

In dieser Anordnung werden die Leiterbahnen durch die Leuchtstoffschicht bedeckt. Die Leuchtstoffschicht selber wird meist mit einer dünnen Schicht aus Aluminium bedeckt, die nicht in Kontakt mit den Leiterbahnen steht. Die dünne Aluminiumschicht auf der Leuchtstoffschicht wirkt als Spiegel und reflektiert nach innen in die Röhre abgestrahltes sichtbares Licht in Richtung Frontplatte. Dadurch wird die Effizienz der Kathodenstrahlröhre erhöht.

Nachteilig bei dieser Anordnung ist, dass durch den geringen Abstand zwischen Leiterbahnen und der Schicht aus Aluminium sich dazwischen eine hohe Kapazität ausbildet. Durch diese Kapazität wird die elektronische Zeitkonstante zur Ermittlung des Signals zur Elektronenstrahlkontrolle vergrößert.

Es ist deshalb eine Aufgabe der vorliegenden Erfindung die Nachteile des Standes der Technik zu umgehen und eine verbesserte Kathodenstrahlröhre bereitzustellen.

Diese Aufgabe wird gelöst, durch eine Kathodenstrahlröhre ausgestattet mit einem Farbbildschirm, einer Elektronenkanone zur Emission mindestens eines Elektronenstrahls und einer Ablenkungsvorrichtung, wobei der Farbbildschirm eine Frontplatte, eine segmentierte Leuchtstoffschicht, auf den Segmenten aufgebracht eine Aluminiumschicht, zwischen den Segmenten einen ersten Satz Leiterbahnen und einen zweiten Satz Leiterbahnen sowie weiterhin ein Mittel zum Empfang von Signalen, die von den Leiterbahnen, welche jeweils auf einem isolierenden Streifen angeordnet sind, generiert werden, und ein Mittel zur Weitergabe von Korrektursignalen an die Ablenkvorrichtung aufweist.

Es ist bevorzugt, dass für die Höhe H eines isolierenden Streifens gilt H > D, wobei D die Schichtdicke der segmentierten Leuchtstoffschicht ist.

Durch Anordnung der Leiterbahnen zwischen den einzelnen Leuchtstoffstreifen (Segmenten) der Leuchtstoffschicht wird das Problem der hohen Kapazität vermieden. Ein weiterer Vorteil dieser Anordnung ist, dass kein Stromausgleich zwischen zwei Leiterbahnen durch Elektronenleitungsphänomene in der Leuchtstoffschicht stattfinden kann.

Es ist weiterhin bevorzugt, dass für die Höhe H eines isolierenden Streifens H < B/tan α gilt, wobei B die Breite eines Segments der segmentierten Leuchtstoffschicht und α der maximale Ablenkwinkel des Elektronenstrahls ist.

Bei dieser Höhe der isolierenden Streifen tritt keine nennenswerte Abschattung der segmentierten Leuchtstoffschicht bei senkrechtem Einfall des Elektronenstrahls auf.

Es ist vorteilhaft, dass die isolierenden Streifen einen trapezförmigen Querschnitt aufweisen.

Es ganz besonders vorteilhaft, dass die Seite eines isolierenden Streifens, auf der sich eine Leiterbahn befindet, breiter ist als die Seite, die an die Frontplatte grenzt.

Durch diese Ausführungsform kann das Aufbringen der Aluminiumschicht mittels bekannter Aufdampfverfahren erfolgen, ohne das die Leiterbahnen und die Aluminiumschicht elektrisch verbunden werden. Das Aufbringen der Aluminiumschicht und der Leiterbahnen kann bei Verwendung von Leiterbahnen aus Aluminium in einem einzigen Schritt erfolgen.

Es kann vorteilhaft sein, dass zwischen Frontplatte und segmentierter Leuchtstoffschicht eine Farbfilterschicht aufgebracht ist.

Durch Aufbringen von Farbfilterschichten zwischen dem Frontglas und der segmentierten Leuchtstoffschicht kann der Tageslichtkontrast der Kathodenstrahlröhre verbessert werden. Weiterhin kann der Bereich der darstellbaren Farben erweitert werden.

Es kann bevorzugt sein, dass zwischen der segmentierten Leuchtstoffschicht und der Aluminiumschicht eine dielektrische Schicht aufgebracht ist.

Die dielektrische Schicht verhindert, dass sich Kurzschlüsse, in dem Aluminium durch die Leuchtstoffschicht zu den Leiterbahnen gelangt, bei der Aluminisierung des Farbbildschirms ausbilden und der gesamte Farbbildschirm unbrauchbar wird. Ist der Brechungsindex der dielektrischen Schicht niedriger als der Brechungsindex des Bildschirmglases, kann durch Aufbringen der dielektrischen Schicht die Menge an spekular reflektiertem Licht reduziert werden. Dies erhöht die Luminanz der Indexröhre und/oder verhindert das Auftreten von störenden äußeren Reflexionen.

Desweiteren betrifft die Erfindung ein Verfahren zur Herstellung einer Kathodenstrahlröhre ausgestattet mit einem Farbbildschirm, einer Elektronenkanone zur Emission mindestens eines Elektronenstrahls und einer Ablenkungsvorrichtung, wobei der Farbbildschirm eine Frontplatte, eine segmentierte Leuchtstoffschicht, auf den Segmenten aufgebracht eine Aluminiumschicht, zwischen den Segmenten einen ersten Satz Leiterbahnen und einen zweiten Satz Leiterbahnen, sowie weiterhin ein Mittel zum Empfang von Signalen, die von den Leiterbahnen generiert werden, und ein Mittel zur Weitergabe von Korrektursignalen an die Ablenkwrrichtung aufweist, wobei die Leiterbahnen jeweils auf einem isolierenden Streifen aufgebracht werden.

Im folgenden soll anhand von drei Figuren und fünf Ausführungsbeispielen die Erfindung näher erläutert werden. Dabei zeigen
- Fig. 1: den Aufbau einer Kathodenstrahlröhre und
- Fig. 2 und Fig. 3: im Querschnitt mögliche Ausführungsformen eines Farbbildschirms.

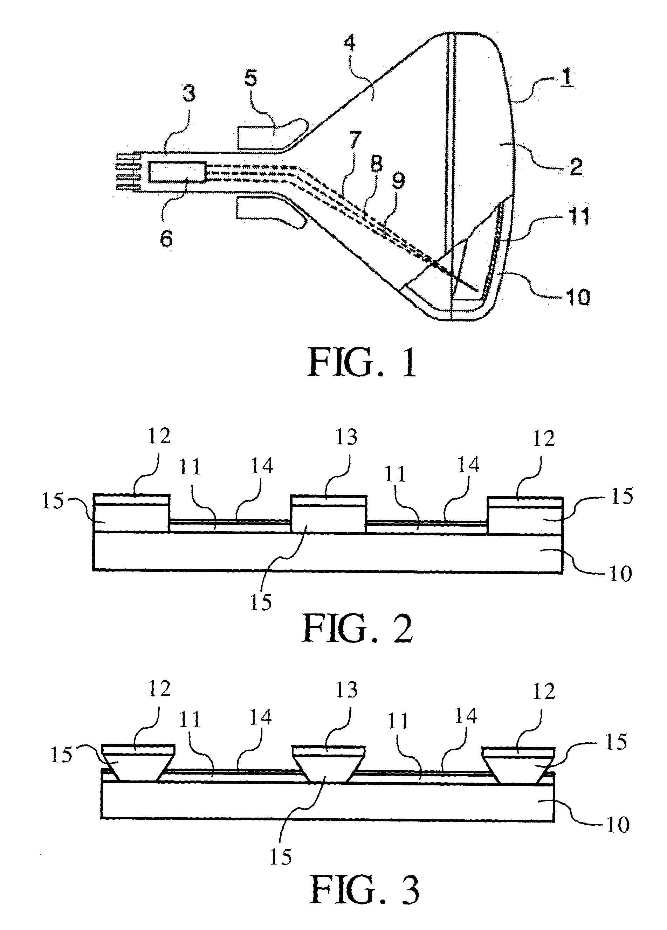

Fig 1 zeigt eine mögliche Ausführungsform der Erfindung. Die in Fig. 1 gazeigte Kathodenstrahlröhre ist eine Farbkathodenstrahlröhre 1, welche einen Farbbildschirm 2, einen Hals 3 und einen Konus 4, der den Farbbildschirm 2 und den Hals 3 miteinander verbindet, aufweist. Im Inneren des Halses 3 befindet sich eine Elektronenkanone 6, welche drei Elektronenstrahlen 7, 8, 9 erzeugt. Letztere breiten sich in dieser Ausführungsform einer Farbkathodenstrahlröhre 1 in einer Ebene, der In-line Ebene, aus und werden auf ihrem Weg zum Farbbildschirm 2 durch eine Ablenkungsvorrichtung 5 horizontal und vertikal abgelenkt. Der Farbbildschirm 2 weist eine Frontplatte 10 auf und auf der Frontplatte 10 befindet sich eine segmentierte Leuchtstoffschicht 11. Die Leuchtstoffschicht 11 enthält rot-, grün- und blau-emittierende Leuchtstoffe, welche in Form von horizontalen Streifentripeln aufgebracht sind. Auf der segmentierten Leuchtsfcoffschicht 11 befindet sich noch eine Aluminiumschicht, welche in Fig. 1 nicht dargestellt ist. Ebenfalls nicht dargestellt ist in Fig. 1, dass zwischen den einzelnen Streifentripeln der Leuchtstoffschicht 11 isolierende Streifen 15 aufgebracht sind, auf denen sich Leiterbahnen 12,13 befinden. Weiterhin nicht dargestellt sind ein Mittel zum Empfang von Signalen, die von den Detektionsstreifen generiert werden und ein Mittel zur Weitergabe von Korrektursignalen an die Ablenkungsvorrichtung 5.

Alternativ kann die Farbkathodenstrahlröhre 1, insbesondere der Farbbildschirm 2, weitere Merkmale, wie eine Farbfilterschicht, welche zwischen der Frontplatte 10 und der segmentierten Leuchtstoffschicht 11 aufgebracht ist, oder eine dielektrische Schicht, welche zwischen der segmentierten Leuchtstoffschicht 11 und der Aluminiumschicht 14 aufgebracht ist, aufweisen.

In Fig. 2 ist der Querschnitt einer Ausführungsform eines Farbbildschirms 2 gezeigt. Auf einer Frontplatte 10 aus Glas sind isolierende Streifen 15 aufgebracht. Diese isolierende Streifen 15 können beispielsweise keramische Materialien oder Glasmaterialien enthalten. Die segmentierte Leuchtstoffschicht 11 ist zwischen die isolierenden Streifen 15 aufgebracht. Als rot-emittierender Leuchtstoff kann beispielsweise Y₂O₂S:Eu, als blau-emittierender Leuchtstoff ZnS:Ag und als grün-emittierender Leuchtstoff kann ZnS:Cu,Au verwendet werden. Auf den Segmenten der Leuchtstoffschicht 11 befindet sich eine dünne Aluminiumschicht 14. Auf den isolierenden Streifen 15 sind Leiterbahnen 12,13, welche ein Metall wie beispielsweise Al oder Ag, ein leitendes Oxid wie zum Beispiel ITO oder ein Metall und ein leitendes Oxid enthalten, aufgebracht. Die Leiterbahnen 12, welche alle elektrisch miteinander verbunden sind, bilden einen ersten Satz an Leiterbahnen. Die Leiterbahnen 13, welche auch alle elektrisch miteinander verbunden sind, sind der zweite Satz an Leiterbahnen. Die Leiterbahnen 12, 13 sind horizontal und alternierend sowie parallel zu den Segmenten der Leuchtstoffschicht 11 aufgebracht.

In Fig 3 ist eine weitere mögliche Ausführungsform eines Farbbildschirms 2 gezeigt. In dieser Ausführungsform weisen die isolierenden Streifen 15 einen trapezförmigen Querschnitt auf, wobei die Seite eines isolierenden Streifens 15, auf der sich eine Leiterbahn 12,13 befindet, breiter ist als die Seite, die an die Frontplatte 10 grenzt. Vorzugsweise liegt die Breite W_{F} der Seite der isolierenden Streifen 15, die an die Frontplatte 10 grenzt in einem Bereich zwischen 2 und 30 µm und die Breite W_{C} der gegenüberliegenden Seite, auf der sich eine Leiterbahn 12,13 befindet, im Bereich von 5 und 50 µm.

In allen Ausführungsformen gilt für die Höhe H eines isolierenden Streifens 15, D ≤ H ≤ B/tan α, wobei D die Dicke der segmentierten Leuchtstoffschicht 11, B die Breite der Leuchtstoffschicht 11 und α der maximale Ablenkwinkel des Elektronenstrahls 7,8,9 ist. Vorzugsweise liegt die Höhe H der isolierenden Streifen 15 in einem Bereich zwischen 20 und 100 µm, die Dicke D der segmentierten Leuchtstoffschicht 11 im Bereich von 10 µm und die Breite B eines Segments der Leuchtstoffschicht 11 zwischen 100 und 200 µm.

Alternativ können zwischen den einzelnen Segmenten der Leuchtstoffschicht 11 und der Frontplatte 10 Farbfilterschichten aufgebracht sein. Eine Farbfilterschicht kann ein anorganisches Pigment enthalten, welches für die jeweilige Emissionswellenlänge des darauf befindlichen Leuchtstoffes transparent ist. So kann sich unter einem rot-emittierenden Leuchtstoff in der segmentierten Leuchtstoffschicht 11 eine Farbfilterschicht befinden, welche Fe₂O₃ oder TaON enthält. Unter einem blau-emittierenden Leuchtstoff kann eine Farbfilterschicht mit CoAl₂O₄ oder Ultramarinen aufgebracht sein. Und unter einem grün-emittierenden Leuchtstoff kann sich eine Farbfilterschicht mit (Co_{0.3}Ni_{0.5}Zn_{0.2})₂TiO₄ oder (Co,Cr)₂Al₂TiO₅ befinden. Die Schichtdicke der Farbfilterschichten beträgt vorzugsweise zwischen 0.2 und 3 µm.

Alternativ können die jeweiligen Pigmente auch dem entsprechenden Leuchtstoff in der segmentierten Leuchtstoffschicht 11 beigemischt werden. Der Anteil an Pigment liegt dabei vorzugsweise zwischen 0.2 und 10 Gew.-% bezogen auf die Menge an jeweiligem Leuchtstoff.

Als Material für die isolierenden Streifen 15 können Glasmaterialien oder keramische Materialien verwendet werden. So können die isolierenden Streifen 15 ein oder mehrere Oxide ausgewählt aus der Gruppe Li₂O, Na₂O, K₂O, SiO₂, B₂O₃, BaO, Al₂O₃, ZnO, MgO, CaO und PbO enthalten.

Die isolierenden Streifen 15 können zusätzlich noch schwarze Pigmente, wie beispielsweise Ruß, Graphit, Ferrite wie MnFe₂O₄ oder Spineile wie(Mn,Fe)₃O₄, Ni(Mn,Fe,Cr)₂O₄ oder Mn(Mn,Fe,Cr)₂O₄, enthalten. So wird gleichzeitig eine Schwarzmatrix erhalten.

Zur Herstellung eines Farbbildschirms 2 werden zunächst auf einer Frontplatte 10 aus Glas die isolierenden Streifen 15 aufgebracht. Die isolierenden Streifen 15 können beispielsweise aus pulverförmigen Material hergestellt werden, welches durch Zugabe eines organischen oder eines anorganischen Bindemittels in der Form gehalten wird. Alternativ können Glasmaterialien oder keramische Materialien verwendet werden, die eine niedrige Glasübergangstemperatur aufweisen und bei 450 und 500 °C aushärten. Auf flachen Substraten können die isolierenden Streifen 15 durch Druckverfahren aufgebracht werden.

Die isolierenden Schichten 15 können auch mittels lithographischer Verfahren oder Sandstrahltechniken aus homogen aufgebrachten Schichten erzeugt werden.

Isolierende Streifen 15 mit trapezförmigen Querschnitt können beispielsweise mittels Siebdrucks von Pasten von niedrig schmelzendem Glas, sogenannten Frits, hergestellt werden. Der Druck erfolgt in mehreren Lagen und die einzelnen Lagen werden mit zunehmendem Abstand von der Frontplatte 10 breiter.

Alternativ können isolierende Streifen 15 mit trapezförmigen Querschnitt auch mittels Sandstrahlen hergestellt werden. Bei dieser Methode werden zunächst isolierende Streifen 15 aus Frit mit rechteckigen Querschnitt hergestellt. Anschließend werden mittels Sandstrahlen die trapezförmigen Strukturen erzeugt. Dazu werden die Sandstrahldüsen in einem Winkel von bis 40° zur Oberflächennormalen gestellt.

Isolierende Streifen 15 mit trapezförmigan Querschnitt könnten auch mittels selektiver Ätzverfahren, beispielsweise Unterätzen, hergestellt werden.

Beim anschließenden Ausheizen der Frontplatte 10 bleibt der trapezförmige Querschnitt der isolierenden Streifen 15 erhalten.

Alternativ können isolierende Streifen 15 mit trapezförmigen Querschnitt auch direkt durch Sandstrahlen im Glas der Frontplarte erzeugt werden. Auch hier werden dazu die Sandstrahldüsen in einem Winkel zur Oberflächennormalen gestellt.

Anschließend werden Suspensionen der einzelnen Leuchtstoffe mittels Druckverfahren oder mittels photolithografischer Verfahren in die Räume zwischen die isolierenden Streifen 15 eingebracht.

Die erhaltene segmentierte Leuchtstoffschicht 11 wird mit einem dünnen organischen Film, beispielsweise aus Polyacrylat, bedeckt und anschließend wird eine Aluminiumschicht 14 mit einer Schichtdicke zwischen 100 und 300 nm aufgebracht. Um eine ausreichende Haftung der Aluminiumschicht 14 auf den Leuchtstoffen zu erhalten, kann der organische Film Löcher aufweisen, durch die Aluminium direkt auf die Leuchtstoffe aufgebracht wird. Die organische Schicht wird beim Ausheizen des gesamten Farbbildschirms 2 rückstandslos entfernt.

Die Leiterbahnen 12,13 können mittels bekannter Aufdampfverfahren oder in Form von Pasten mit Metallpartikeln auf den isolierenden Streifen 15 aufgebracht werden. Dies kann vor oder nach der Strukturierung der isolierenden Streifen 15 geschehen. Die Schichtdicke der Leiterbahnen 12,13 beträgt vorzugsweise zwischen 2 und 10 µm.

Sollen sich zwischen Frontplatte 10 und segmentierter Leuchtstoffschicht 11 Farbfilterschichten befinden, so werden zunächst Suspensionen der jeweiligen Pigmente mittels Druckverfahren in die Räume zwischen die isolierenden Streifen 15 aufgebracht. Vor dem Aufbringen der Leuchtstoffe wird die gesamte Frontplatte 10 ausgeheizt.

Die Leiterbahnen 12 werden elektrisch miteinander verbunden und die Leiterbahnen 13 werden elektrisch miteinander verbunden. Die beiden Sätze an Leiterbahnen werden mit einem Mittel zum Empfang von Signalen, die unter Beschuss mit Elektronen von den Leiterbahnen 12,13 generiert werden, und einem Mittel zur Weitergabe von Korrektursignalen an die Ablenkvorrichtung 5 verbunden.

Ein derartiger Farbbildschirm 2 kann dann zusammen mit einem Hals 3, einem den Farbbildschirm 2 mit dem Hals 3 verbindenden Konus 4, eine Ablenkungsvorrichtung 5 und eine im Inneren des Halses 3 vorgesehene Elektronenkanone 6 zur Emission von drei Elektronenstrahlen 7,8,9 zum Bau einer Farbkathodenstrahlröhre 1 verwendet werden.

Zur Positionsbestimmung der Elektronenstrahlen 7,8 und 9 wird durch ein Mittel zum Empfang von Signalen, die von jedem Satz an Leiterbahnen generiert werden, ein Differenzstromsignal der gemessenen Stromsignale erzeugt. Ist das erhaltene Differenzstromsignal gleich Null, so sind die Elektronenstrahlen 7, 8 und 9 genau in der Mitte der korrespondierenden Leuchtstofflinie in der Leuchtstoffschicht 11. Besitzt das Differenzstromsignal einen positiven oder negativen Wert sind die Elektronenstrahlen 7, 8 und 9 nach oben oder nach unten in den Leuchtstofflinien verschoben. In diesem Fall kann durch ein Mittel zur Weitergabe von Korrektursignalen an die Ablenkvorrichtung 5 die Portion der Elektronenstrahlen 7, 8 oder 9 korrigiert werden. Damit bei einem Horizontal-Scan die Elektronenstrahlen 7, 8, 9 jeweils nur eine Leuchtstofflinie anregen, werden die Elektronenstrahlen 7, 8, 9 nicht direkt untereinander, sondern um eine Leuchtstofflinie versetzt angeordnet.

Durch gleichzeitige Bestimmung der Position aller drei Elektronenstrahlen 7, 8 und 9 durch ein Signal kann die Detektorelektronik einfach gehalten werden. In dieser Ausführung ist es von Vorteil, dass die Farbkathodenstrahlröhre 1 ein Korrektur-System aufweist welches die Position der Elektronenstrahlen 7, 8 und 9 zueinander kontrolliert und korrigiert. Dieses Korrektur-System verhindert den Fall, dass sich nur die Portion eines Elektronenstrahls 7,8 oder 9 verändert und durch ein gemessenes Differenzstromsignal alle drei Elektronenstrahlen 7, 8 und 9 als Ganzes korrigiert werden.

Alternativ kann die Farbkathodenstrahlröhre mit einem Elektronenstrahl, mit zwei oder mehr Elektronenstrahlen arbeiten.

Im folgend werden Ausführungsformen der Erfindung erläutert, die beispielhafte Realisierungsmöglichkeiten darstellen.

### Ausführungsbeispiel 1

Zur Herstellung eines Farbbildschirm 2 wurden zunächst die isolierenden Streifen 15 auf einer Frontplatte 10 aus Glas aufgebracht. Dazu wurde ein Glaspulver, welches Li₂O, SiO₂, B₂O₃, BaO, Al₂O₃, ZnO, MgO und CaO enthielt, mittels Siebdrucks auf der Frontplatte aufgebracht.

Die Höhe H der isolierenden Streifen 15 betrug jeweils 50 µm. Die Breite W_{F} jedes isolierenden Streifens betrug an der Seite, die an die Frontplatte 10 angrenzt 30 µm und die Breite W_{C} an der gegenüberliegenden Seite betrug 30 µm.

Auf jeden isolierenden Streifen 15 wurde als Leiterbahn 12,13 eine Paste mit Ag-Partikeln mit einer Schichtdicke von 2 µm abgeschieden. In die Räume zwischen den isolierenden Streifen 15 wurde die segmentierte Leuchtstoffschicht 11, welche als Leuchtstoffe ZnS:Cu,Au, ZnS:Ag und Y₂O₂S:Eu enthielt, aufgebracht. Die Breite eines streifenförmigen Segments der segmentierten Leuchtstoffschicht 11 betrug 170 µm und die Dicke der segmentierten Leuchtstoffschicht 11 betrug 10 µm.

Auf die segmentierte Leuchtstoffschicht 11 wurde ein dünner organischer Film aus Poly(*iso*butylmethacrylat) aufgebracht und zwar derart, dass einzelne Leuchtstoffpartikel nicht mit dem Film aus Polyacrylat bedeckt waren. Anschließend wurde die Aluminiumschicht 14 mit einer Schichtdicke von 200 nm unter Verwendung einer Maske abgeschieden. Die organische Schicht wurde später beim Ausheizen des gesamten Farbbildschirms 2 rückstandslos entfernt.

Die Leiterbahnen 12 wurden elektrisch miteinander verbunden und die Leiterbahnen 13 wurden elektrisch miteinander verbunden. Die beiden erhaltenen Sätze an Leiterbahnen wurden mit einer Detektorelektronik verbunden, welche ein Mittel zum Empfang von Signalen, die von den Leiterbahnen 12,13 generiert werden, und ein Mittel zur Weitergabe von Korrektursignale an eine Ablenkvorrichtung 5 enthielt.

Ein derartiger Farbbildschirm 2 wurde zusammen mit einem Hals 3, einem den Farbbildschirm 2 mit dem Hals 3 verbindenden Konus 4, eine Ablenkungsvorrichtung 5 und eine im Inneren des Halses 3 vorgesehene Elektronenkanone 6 zur Emission von drei Elektronenstrahlen 7,8,9 zum Bau einer verbesserten Farbkathodenstrahlröhre 1 verwendet.

### Ausführungsbeispiel 2

Es wurde ein Farbbildschirm 2 analog wie in Ausführungsbeispiel 1 beschrieben hergestellt, nur dass die isolierenden Streifen 15 einen trapezförmigen Querschnitt aufwiesen. Dazu erfolgte der Siebdruck in mehreren Lagen und die einzelnen Lagen wurden mit zunehmenden Abstand zur Frontplatte 10 breiter. Die Breite W_{F} jedes isolierenden Streifens betrug an der Seite, die an die Frontplatte 10 angrenzt 30 µm und die Breite W_{C} an der gegenüberliegenden Seite betrug 50 µm. Die Schichtdicke der Leiterbahnen 12,13 aus Ag betrug in dieser Ausführungsform 8 µm.

### Ausführungsbeispiel 3

Es wurde ein Farbbildschirm 2 analog wie in Ausführungsbeispiel 2 beschrieben hergestellt, nur dass die Höhe H der isolierenden Streifen 15 70 µm, die Breite W_{F} der isolierenden Streifen 1510 µm, die Breite W_{C} der isolierenden Streifen 15 40 µm und die Breite B eines Segments der segmentierten Leuchtstoffschicht 11 180 µm betrug. Die Aluminiumschicht 14 besaß eine Dicke von 100 nm. Außerdem wurden dem not-emittierenden Leuchtstoff 0.4 Gew.-% Fe₂O₃ bezogen auf die Menge an Y₂O₂S:Eu, dem blau-emittierenden Leuchtstoff 3 Gew.-% CoAl₂O₄ bezogen auf die Menge an ZnS:Ag und dem grün-emittierenden Leuchtstoff 2 Gew.-% (Co_{0.3}Ni_{0.5}Zn_{0.2})₂TiO₄ bezogen auf die Menge an ZnS:Cu,Au beigemischt.

Ein derartiger Farbbildschirm 2 wurde zusammen mit einem Hals 3, einem den Farbbildschirm 2 mit dem Hals 3 verbindenden Konus 4, eine Ablenkungsvorrichtung 5 und eine im Inneren des Halses 3 vorgesehene Elektronenkanone 6 zur Emission von drei Elektronenstrahlen 7, 8, 9 zum Bau einer verbesserten Farbkathodenstrahlröhre 1 verwendet.

### Ausführungsbeispiel 4

Es wurde ein Farbbildschirm 2 analog wie in Ausführungsbeispiel 2 beschrieben hergestellt, nur dass die Höhe H der isolierenden Streifen 15 100 µm, die Breite W_{F} der isolierenden Streifen 15 5 µm, die Breite W_{C} der isolierenden Streifen 15 40 µm und die Breite B eines Segments der segmentierten Leuchtstoffschicht 11 150 µm betrug. Die Aluminiumschicht 14 besaß eine Dicke von 100 nm. Außerdem wurden die isolierenden Streifen 15 durch Zugabe von 5 Gew.-% Ruß bezogen auf die Menge des Glaspulver schwarz eingefärbt.

Ein derartiger Farbbildschirm 2 wurde zusammen mit einem Hals 3, einem den Farbbild-Schirm 2 mit dem Hals 3 verbindenden Konus 4, eine Ablenkungsvorrichtung 5 und eine im Inneren des Halses 3 vorgesehene Elektronenkanone 6 zur Emission von drei Elektronenstrahlen 7, 8, 9 zum Bau einer verbesserten Farbkathodenstrahlröhre 1 verwendet.

### Ausführungsbeispiel 5

Es wurde ein Farbbildschirm 2 analog wie in Ausführungsbeispiel 2 beschrieben hergestellt, nur dass die Höhe H der isolierenden Streifen 15 50 µm, die Breite W_{F} der isolierenden Streifen 15 2 µm, die Breite W_{C} der isolierenden Streifen 15 30 µm und die Breite B eines Segments der segmentierten Leuchtstoffschicht 11 100 µm betrug. Die Aluminiumschicht 14 besaß eine Schichtdicke von 300 nm. Außerdem wurde vor dem Aufbringen der Leuchtstoffschicht 11 zunächst in die Räume zwischen den isolierenden Streifen 15 eine Farbfilterschicht mittels Druckverfahren auf die Frontplatte 10 aufgebracht. Unter den rot-emittierenden Leuchtstoffstreifen der Leuchtstoffschicht 11 wurde ein Farbfilterschichtstreifen mit Fe₂O₃ als Pigment aufgebracht, unter den blau-emittierenden Leuchtstoffstreifen der segmentierten Leuchtstoffschicht 11 wurde ein Farbfilterschichtstreifen mit CoAl₂O₄ als Pigment aufgebracht und unter den grün-emittierenden Leuchtstoffstreifen der Leuchtstoffschicht 11 wurde ein Farbfilterschichtstreifen mit (Co_{0.3}Ni_{0.5}Zn_{0.2})₂TiO₄ als Pigment aufgebracht.

Ein derartiger Farbbildschirm 2 wurde zusammen mit einem Hals 3, einem den Farbbildschirm 2 mit dem Hals 3 verbindenden Konus 4, eine Ablenkungsvorrichtung 5 und eine im Inneren des Halses 3 vorgesehene Elektronenkanone 6 zur Emission von drei Elektronenstrahlen 7,8,9 zum Bau einer verbesserten Farbkathodenstrahlröhre 1 verwendet.

## Patentansprüche

1. Kathodenstrahlröhre ausgestattet mit einem Farbbildschirm (2), einer Elektronenkanone (6) zur Emission mindestens eines Elektronenstrahls (7,8,9) und einer Ablenkungsvorrichtung (5), wobei der Farbbildschirm (2) eine Frontplatte (10), eine segmentierte Leuchtstoffschicht (11), auf den Segmenten aufgebracht eine Aluminiumschicht (14), zwischen den Segmenten einen ersten Satz Leiterbahnen und einen zweiten Satz Leiterbahnen,, sowie weiterhin ein Mittel zum Empfang von Signalen, die von den Leiterbahnen (12,13), welche jeweils auf einem isolierendem Streifen (15) angeordnet sind, gazeriert werden, und ein Mittel zur Weitergabe von Korrektursignalen an die Ablenkvorrichtung (5) aufweist.

2. Kathodenstrahlröhre nach Anspruch 1,
**dadurch gekennzeichnet,**
**dass** für die Höhe H eines isolierenden Streifens (15) gilt H > D, wbei D die Schichtdicke der Leuchtstoffschicht (11) ist.

3. Kathodenstrahlröhre nach Anspruch 1,
**dadurch gekennzeichnet,**
**dass** für die Höhe H eines isolierenden Streifen (15) gilt H < B/tan α, wobei B die Breite eines Segments der segmentierten Leuchtstoffschicht (11) und α der maximale Ablenkwinkel des Elektronenstrahls (7,8,9) ist.

4. Kathodenstrahlröhre nach Anspruch 1,
**dadurch gekennzeichnet,**
**dass** die isolierenden Streifen (15) einen trapezförmigen Querschnitt aufweisen.

5. Kathodenstrahlröhre nach Anspruch 1,
**dadurch gekennzeichnet,**
**dass** die Seite eines isolierenden Streifens (15), auf der sich eine Leiterbahn (12,13) befindet, breiter ist als die Seite, die an die Frontplatte (10) grenzt.

6. Kathodenstrahlröhre nach Anspruch 1,
**dadurch gekennzeichnet,**
**dass** zwischen Frontplatte (10) und segmentierter Leuchtstoffschicht (11) eine Farbfilterschicht aufgebracht ist.

7. Kathodenstrahlröhre nach Anspruch 1,
**dadurch gekennzeichnet,**
**dass** zwischen der segmentierten Leuchtstoffschicht (11) und der Aluminiumschicht (14) eine dielektrische Schicht aufgebracht ist.

8. Verfahren zur Herstellung einer Kathodenstrahlröhre ausgestattet mit einem Farbbildschirm (2), einer Elektronenkanone (6) zur Emission mindestens eines Elektronenstrahls (7, 8,9) und einer Ablenkungsvorrichtung (5), wobei der Farbbildschirm (2) eine Frontplatte (10), eine segmentierte Leuchtstoffschicht (11), auf den Segmenten aufgebracht eine Aluminiumschicht (14), zwischen den Segmenten einen ersten Satz Leiterbahnen und einen zweiten Satz Leiterbahnen, sowie weiterhin ein Mittel zum Empfang von Signalen, die von den Leiterbahnen (12,13) generiert werden, und ein Mittel zur Weitergabe von Korrektursignalen an die Ablenkvorrichtung (5) aufweist,
**dadurch gekennzeichnet,**
**dass** die Leiterbahnen (12,13) jeweils auf einem isolierenden Streifen (15) aufgebracht werden.
